# FASCICULE DE BREVET EUROPEEN

(11) **EP 1 619 070 B1**
(45) Date de publication et mention de la délivrance du brevet: **20.06.2007**
(21) Numéro de dépôt: 04291859.9
(22) Date de dépôt: 21.07.2004
(51) Int. Cl.: B60N 2/46

(54) **Dispositif de guidage pour un ensemble mobile**
Führungsvorrichtung für eine bewegliche Einheit
Guiding device for a mobile unit

(43) Date de publication de la demande: 25.01.2006
(73) Titulaire: Euramax Industries S.A., 49260 Montreuil-Bellay (FR); Microtechnic S.A., 98000 Monaco (MC)
(72) Inventeur: Charles, Aurélien, 49260 Montreuil-Bellay (FR); Doucet, Yannick, 49400 Bagneux (FR); Zanini, Ambroise, 98014 Monaco Cedex (MC)
(74) Mandataire: Maillet, Alain

(56) Documents cités:
- EP-A- 1 033 283
- EP-A- 1 225 089
- EP-A- 1 245 447
- WO-A-02/102619
- FR-A- 2 812 600
- US-B1- 6 503 036

## Description

L'invention concerne un dispositif de guidage pour un ensemble mobile pour habitacle de véhicule. L'invention concerne aussi un ensemble pour habitacle de véhicule comprenant un tel dispositif et un véhicule comprenant un tel ensemble. Elle trouve application dans le domaine des aménagements pour véhicules.

Le document EP-A-1 245 447 décrit un ensemble de console pour habitacle de véhicule compr enant une console coulissante munie d'un rail, et un dispositif de guidage, réalisé sous forme d'un chariot fixé à l'habitacle et qui comprend des moyens de coulissement de la console par rapport au dispositif de guidage. Les moyens de coulissement décrits dans ce document ont la forme de galets insérés dans des rainures du rail de la console. La portée des galets étant inférieure à la longueur du rail de la console, celle-ci se trouve en porte-à-faux par rapport au chariot. En particulier, lorsque la projection verticale du centre de gravité de la console ne se trouve plus à l'intérieur d'une surface de stabilité définie par le dispositif de guidage, le porte-à-faux devient excessif, ce qui peut entraîner l'apparition de jeux et donc un mauvais ajustement entre le rail et le chariot, ce qui peut générer des bruits par exemple au roulage. Ces positions extrêmes sont atteintes lorsque la raideur des moyens de coulissement et du dispositif de guidage ne peuvent plus compenser les efforts générés par la console.

Une solution a été apportée par le document FR-B-2 812 600. Cette solution consiste en la mise en place d'une petite roue qui est montée rotative sur la console et qui est susceptible de rouler sur des pistes placées sous la console.

Un dispositif de guidage selon le préambule de la revendication 1 est décrit dans le document US-B-6503036.

Cette solution oblige à mettre en place des pistes de roulement qui peuvent être incompatibles avec d'autres éléments d'aménagements du véhicules, comme par exemple des cavités vide-poches placées sous la console.

Dans le cas où le plancher est recouvert de moquette, le roulage de la roue sur la moquette peut engendrer de l'usure ou des taches dues au frottement de la roue sur la moquette.

Un objet de la présente invention est de proposer un dispositif de guidage pour un ensemble mobile pour habitacle de véhicule qui ne présente pas les inconvénients de l'art antérieur.

A cet effet, est proposé un dispositif de guidage pour un ensemble mobile pour habitacle de véhicule, ledit ensemble mobile étant coulissant et muni d'au moins un rail définissant un plan; et
ledit dispositif de guidage étant fixé sur ledit habitacle et comprenant au moins un moyen de coulissement du ou des rails par rapport au dispositif de guidage, ledit moyen de coulissement définissant un intervalle intérieur de stabilité de l'ensemble mobile dans la direction de coulissement,
le dispositif de guidage étant caractérisé en ce qu'il comprend, en vis-à-vis d'au moins un des rails, au moins un appui fixe qui exerce sur le ou les rails en vis-à-vis au moins une force de butée sensiblement orthogonale au plan lorsque le centre de gravité de l'ensemble mobile se projette verticalement en dehors de l'intervalle intérieur de stabilité.

Avantageusement le dispositif de guidage comprend deux appuis fixes disposés à chaque extrémité du ou des moyens de coulissement et au-dessus du ou des rails et deux appuis fixes disposés à chaque extrémité du ou des moyens de coulissement et au-dessous du ou des rails.

Avantageusement chaque appui fixe placé d'un côté du ou des rails est disposé en vis-à-vis d'un appui fixe placé de l'autre côté du ou des rails.

Avantageusement la distance entre chaque appui fixe et le ou les rails est strictement positive lorsque le centre de gravité de l'ensemble mobile se projette verticalement dans l'intervalle intérieur de stabilité.

Avantageusement les appuis fixes se prolongent par des rampes qui s'évasent dans des directions opposées aux moyens de coulissement.

Avantageusement les rampes en vis-à-vis de l'ensemble mobile viennent en contact avec l'ensemble mobile lorsque le centre de gravité de l'ensemble mobile se projette verticalement en dehors de l'intervalle intérieur de stabilité.

Avantageusement chaque moyen de coulissement est constitué d'un châssis sur lequel sont agencés au moins un appui fixe qui coopère avec l'une des faces du ou des rails et au moins un appui mobile qui est contraint contre l'autre face du ou des rails.

Avantageusement chaque appui fixe est disposé en vis-à-vis d'un appui mobile.

Avantageusement les appuis fixes et les appuis mobiles sont réalisés en un matériaux à faible coefficient de frottement sur le matériaux constituant le ou les rails, du type polyacétal (POM).

Avantageusement le ou les appuis mobiles sont contraints par des ressorts.

Avantageusement les contacts entre les appuis et le ou les rails sont des contacts cylindres-plans.

Avantageusement les appuis fixes forment des extensions de chaque châssis.

L'invention propose aussi un ensemble pour habitacle de véhicule caractérisé en ce qu'il comprend un ensemble mobile et un dispositif de guidage selon l'une des variantes précédentes.

Avantageusement, l'ensemble mobile est une console centrale de véhicule.

L'invention propose aussi un véhicule caractérisé en ce qu'il comprend un ensemble selon l'une des variantes précédentes.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels:
la Fig. 1 représente une vue en perspective d'un ensemble pour habitacle de véhicule selon l'invention;
la Fig. 2 représente une vue en coupe d'un ensemble selon l'invention selon le plan II de la Fig. 1; et
la Fig. 3 représente une vue en coupe d'un ensemble selon l'invention selon la ligne III-III de la Fig. 2.

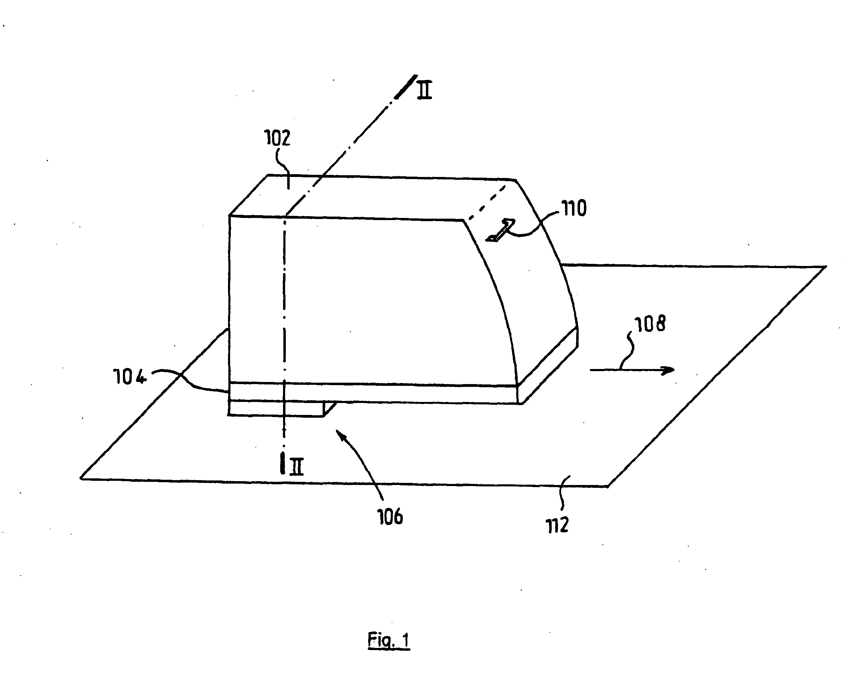

La Fig. 1 représente un ensemble 100 pour habitacle de véhicule qui comprend un ensemble mobile 102 placée au dessus du plancher 112 du véhicule et qui est coulissante dans une direction 108 généralement parallèle au sens de la marche du véhicule et qui peut être sensiblement montante vers l'avant du véhicule pour permettre un réglage en hauteur de l'ensemble mobile 102 qui est souvent prévue pour servir d'accoudoir pour les passagers placés à l'avant du véhicule. Un véhicule est généralement muni d'au moins un ensemble 100. L'ensemble mobile 102 est de préférence une console centrale de véhicule. La console 102 comprend un dispositif de blocage en translation de la console 102 par rapport à l'habitacle qui est libéré par l'utilisateur lorsqu'il veut faire coulisser la console 102 et qui est bloqué lorsque la console 102 est dans la position désirée. Pour aider à la manipulation de la console 102, l'utilisateur dispose d'une poignée 110 fixée sur la console 102 qui lui permet de faire avancer ou reculer la console 102.

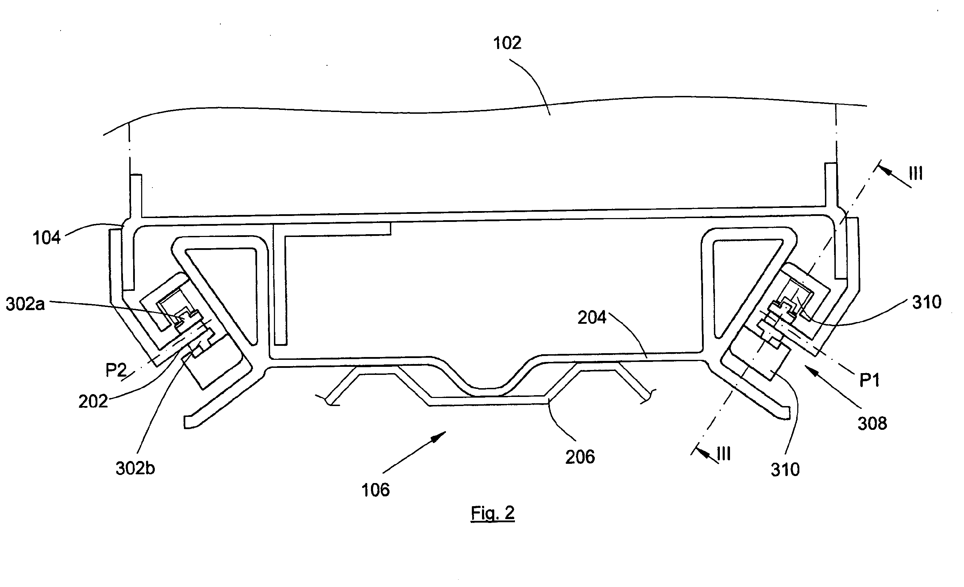

La console 102 comprend un profilé 104 munie de deux rails 202 (Fig. 2), qui se déplacent chacun dans un plan P1, P2. Les plans P1, P2 sont définis comme les plans moyens des rails 202. Les rails 202 sont de longueur sensiblement égale à la longueur de la console 102 et coopèrent avec un dispositif de guidage 106 fixé sur l'habitacle qui permet le coulissement de la console 102.

Le dispositif de guidage 106 comprend des moyens de coulissement 308 qui coopèrent avec les rails 202 pour permettre le coulissement de la console 102 par rapport au dispositif de guidage 106. Les zones de coopération des moyens de coulissement 308 et des rails 202 définissent ainsi des zones de réaction des moyens de coulissement 308 sur les rails 202.

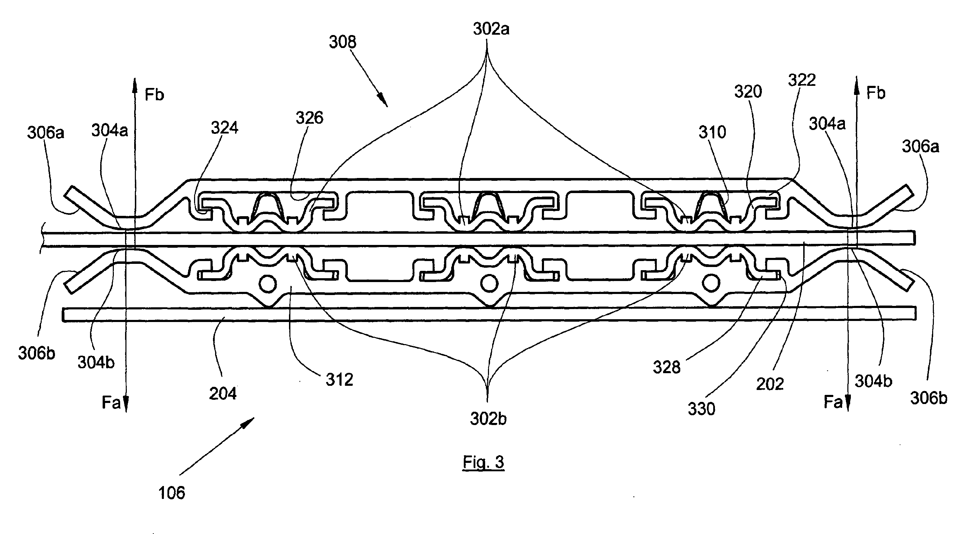

Pour des raisons d'encombrement et en particulier pour être entièrement placé sous la console 102 quelque soit la position de la console 102, le dispositif de guidage 106 a une longueur inférieure à la longueur de la console 102 et des rails 202, c'est-à-dire que le dispositif de guidage 106 et les moyens de coulissement 308 (Fig. 3) ont une portée qui est inférieure à la longueur des rails 202 de la console 102, ce qui entraîne l'apparition d'un phénomène de mise en porte-à-faux de la console 102 par rapport au dispositif de guidage 106. Les moyens de coulissement 308 définissent ainsi un intervalle intérieur de stabilité de la console 102 dans la direction de coulissement 108. C'est-à-dire que si le centre de gravité de la console 102 se projette verticalement à l'intérieur de cet intervalle intérieur de stabilité, la console 102 n'est pas en porte-à-faux, mais si le centre de gravité de la console 102 se projette verticalement à l'extérieur de cet intervalle, la console 102 est en porte-à-faux. Le phénomène de porte-à-faux s'amplifie lorsque le centre de gravité de la console 102 s'éloigne de l'intervalle intérieur de stabilité.

Cet intervalle de stabilité n'est pas limité à la zone couverte par les moyens de coulissement 308 mais elle s'élargit à la zone dans laquelle les forces générées par la console 102 sur les moyens de coulissement 308 sont compensées par la raideur des moyens de coulissement 308. En d'autres termes les limites de l'intervalle de stabilité sont atteintes lorsque la projection verticale du centre de gravité de la console 102 s'éloigne suffisamment dans la direction de coulissement 108, des zones de réaction des moyens de coulissement 308 sur les rails 202 pour que la raideur des moyens de coulissement 308 ne puisse plus compenser les efforts générées par la console 102 sur les moyens de coulissement 308.

Ce phénomène d'arc-boutement peut alors entraîner la déformation des rails 202 ou des moyens de coulissement 308 et engendrer l'apparition de jeux dans l'ensemble 100.

Pour limiter ce phénomène d'arc-boutement lorsque le centre de gravité de la console 102 se projette verticalement en dehors de l'intervalle intérieur de stabilité, le dispositif de guidage 106 comprend, en vis-à-vis d'au moins un rail 202, de préférence en vis-à-vis de chaque rail 202, au moins un appui fixe 304a, 304b ((Fig. 3) qui exerce sur chaque rail 202 en vis-à-vis au moins une force de butée Fa, Fb sensiblement orthogonale à chacun des plans P1, P2 définis par chaque rail 202. Ces appuis fixes autorisent le coulissement de la console mais interdisent l'arc-boutement. La mise en place de ces appuis fixes 304a, 304b permet de limiter le débattement angulaire de la console 102 lors de ses déplacements le long du dispositif de guidage 106 et leur positionnement au niveau du dispositif de guidage 106 les rend invisibles à l'utilisateur, permet une plus grande liberté d'aménagement des parties de l'habitacle situées sous la console 102 et évite l'apparition de traces d'usure et de frottement sur les parties visibles de l'habitacle.

La Fig. 2 permet de mieux comprendre l'interaction qui existe entre la console 102 et le dispositif de guidage 106.

Le profilé 104 de la console 102 est constitué des deux rails 202, qui présentent, dans cet exemple, un angle l'un par rapport à l'autre et définissent ainsi les plans P1, P2. Chaque plan P1, P2 est donc sensiblement parallèle au rail 202 qui le définit. Dans le cas où les rails 202 sont tous les deux horizontaux, les plans P1 et P2 sont horizontaux et de préférence confondus et les forces de butées Fa, Fb sont sensiblement verticales.

Le dispositif de guidage 106 est constitué d'un châssis 204, de préférence en métal qui est fixé sur le châssis 206 du véhicule et sur lequel sont agencés les moyens de coulissement 308 et les appuis fixes 304a, 304b en vis-à-vis de chaque rail 202.

La structure du dispositif de guidage 106 sera mieux comprise en relation avec la Fig. 3 qui montre un des moyens de coulissement 308 du dispositif de guidage 106.

Le dispositif de guidage 106 est de préférence symétrique, et pour des raisons de facilité de compréhension un seul des côtés du dispositif de guidage 106 sera décrit.

Sur l'un de ces côtés, le dispositif de guidage 106 comprend, d'une part, deux appuis fixes 304a disposés à chaque extrémités du moyen de coulissement 308 et au-dessus du rail 202 et, d'autre part, deux appuis fixes 304b disposés à chaque extrémités du moyen de coulissement 308 et au-dessous du rail 202. Cette configuration des appuis fixes 304a, 304b permet de prévenir toute rotation de la console 102 quelque soit son sens de rotation. En effet, quelque soit le sens de rotation de la console 102, le rail 202 va venir heurter au moins l'un des appuis fixes 304a et 304b.

Pour que la console 102 se comporte, d'une manière sensiblement identique qu'elle se trouve en porte-à-faux d'un côté ou de l'autre des moyens de coulissement 308, chaque appui fixe 304a, 304b placé d'un côté du rail 202 est disposé en vis-à-vis d'une appui fixe 304b, 304a placé de l'autre côté du rail 202.

Pour éviter que le rail 202 frotte sur l'un des appuis fixes 304a, 304b lorsque le centre de gravité de la console 102 se projette dans l'intervalle de stabilité et génère ainsi du bruit ou des forces de frottement inacceptables pour l'utilisateur lors du coulissement de la console 102, la distance entre chaque appui fixe 304a, 304b et le rail 202 est telle qu'il puisse coulisser sans frotter sur les appuis fixes 304a, 304b. C'est-à-dire que cette distance doit être strictement positive et même de l'ordre de quelques dixièmes de millimètres pour tenir compte des tolérances de fabrication.

Les appuis fixes 304a, 304b se prolongent par des rampes 306a, 306b qui s'évasent dans des directions opposées au moyen de coulissement 308. Ces rampes ont alors la forme de goulots qui permettent de guider le rail 202 entre les appuis fixes 304a, 304b puis dans le moyen de coulissement 308, lors du montage de la console 102 sur le dispositif de guidage 106.

Lorsque le centre de gravité de l'ensemble mobile 102 se projette verticalement en dehors de l'intervalle intérieur de stabilité, la console s'arc-boute et pour limiter l'arc-boutement et créer une zone de reprise des efforts entre la console 102 et le dispositif de guidage 106, les rampes 306a en vis-à-vis de la console 102 viennent en contact avec la console 102. Le contact ainsi créé permet une reprise des efforts par les rampes 306a.

Le moyen de coulissement 308 est constitué d'un châssis 312 sur lequel sont agencés au moins un appui fixe 302b et un appui mobile 302a, dans l'exemple de la Fig. 3 ces appuis sont chacun au nombre de trois.

Les appuis fixes 302b coopèrent avec l'une des faces du rail 202, c'est-à-dire que le rail 202 repose sur les appuis fixes 302b tandis que les appuis mobiles 302a sont contraints contre l'autre face du rail 202. Le rail 202 est donc pincé entre les appuis fixes 302b et les appuis mobiles 302a qui réalisent ainsi un dispositif de coulissement sans jeu.

La contrainte qui s'exerce sur chaque appui mobile 302a est due à un ressort 310, qui peut être un ressort plat, placé entre l'appui mobile 302a et le châssis 312 du côté opposé au rail 202. La raideur du ressort 310 doit être suffisante pour permettre la compensation des jeux de glissement mais elle doit être suffisamment faible pour ne pas créer de gêne pour l'utilisateur lors du coulissement de la console 102. C'est l'équilibre entre ces deux contraintes qui va définir les limites de l'intervalle de stabilité, en effet plus la raideur des ressorts 310 est importante moins la console 102 a tendance à s'arc-bouter et les limites de l'intervalle de stabilité s'éloignent du dispositif de guidage 106 mais le coulissement de la console 102 est plus difficile. A contrario, plus la raideur des ressorts 310 est faible plus la console 102 a tendance à s'arc-bouter et les limites de l'intervalle de stabilité se rapprochent du dispositif de guidage 106 et le coulissement de la console 102 est plus facile.

Dans l'exemple de la Fig. 3, les appuis mobiles 302a sont constitués de patins comportant des extrémités 320 qui se logent dans des cavités 322 du châssis 312. Ces cavités 322 sont telles qu'elles autorisent un déplacement des appuis mobiles 302a entre une surface 324 proche du rail 202 et une surface 326 éloignée du rail 202 dans une direction orthogonale au rail 202. Les ressorts 310, placés entre le châssis 312 et les appuis mobiles 302a, poussent ces derniers contre le rail 202. Les dimensions des différents éléments doivent être telles que lorsque les appuis mobiles 302a sont en contact avec le rail 202, leurs extrémités 320 ne sont pas en contact avec la surface 324 proche du rail 202.

Le déplacement des appuis mobiles 302a permet dans un sens l'insertion du rail 202 entre les appuis et permet dans l'autre sens le pincement du rail 202 par les appuis mobiles 302a.

Les appuis fixes 302b sont constitués de patins comportant des extrémités 328 qui se logent dans des cavités 330 du châssis 312. Ces cavités 330 sont telles que les appuis fixes 302b y sont montés de manière à ne pas pouvoir se déplacer latéralement.

Pour un meilleur guidage et une meilleure stabilité du rail 202, chaque appui fixe 302b est disposé en vis-à-vis d'un appui mobile 302a.

Les appuis fixes 302b et les appuis mobiles 302a sont avantageusement réalisés en un matériaux à faible coefficient de frottement sur le matériau constituant les rails 202, du type polyacétal (POM) pour réduire les forces de frottement entre le rail 202 et les appuis 302a, 302b.

Pour améliorer le glissement du rail 202 par rapport aux appuis, les contacts entre les appuis 302a, 302b et le rail 202 sont des contacts cylindres-plans.

L'ajustement entre les appuis fixes 304a, 304b et les appuis 302a, 302b doit être suffisamment précis pour éviter l'apparition d'arcs-boutements trop importants. Pour faciliter cet ajustement les appuis fixes 304a, 304b forment des extensions du châssis 312, c'est-à-dire que le châssis 312 et les appuis fixes 304a, 304b sont monoblocs.

Le fonctionnement de l'ensemble 100 est le suivant. Lorsque l'utilisateur veut faire coulisser la console 102 par rapport au dispositif de guidage 106, il libère le dispositif de blocage et déplace la console 102 dans la position désirée grâce à la poignée 110.

Si la console 102 atteint une des limites de l'intervalle de stabilité, la console 102 s'arc-boute sur ses rails 202, ce qui entraîne une rotation du rail 202 qui vient alors en contact de un ou de deux appuis fixes, dans ce dernier cas, il viendra en contact avec un premier appui fixe 304a placé au dessus du rail 202 et un deuxième appui fixe 304b placé au dessous du rail 202, ces deux appuis fixes étant disposés à chaque extrémité du moyen de coulissement 308 dans le sens de coulissement 108. Le contact entre le rail 202 et la ou les appuis fixes va créer une force de butée Fa, Fb qui va retenir le rail 202 tout en autorisant la poursuite du coulissement de la console 102.

La limite de l'intervalle de stabilité est atteinte lorsque les efforts générés par les rails 202 sur les moyens de coulissement 308 sont tels qu'ils ne peuvent pas être compensés par la raideur des moyens de coulissement 308. Lorsqu'il existe des ressorts 310, cette limite est atteinte lorsque la raideur des ressorts 310 ne peut plus empêcher le décollement du rail 202 d'au moins un des appuis fixes 302b. Dans le cas où tous les appuis sont fixes, cette limite est atteinte lorsque le moyen de coulissement 308 commence à se déformer.

Bien entendu, la présente invention n'est pas limitée aux exemples et modes de réalisation décrits et représentés, mais elle est susceptible de nombreuses variantes accessibles à l'homme de l'art.

Par exemple, la console 102 a été décrite comme étant constituée d'un profilé 104 muni de deux rails 202, mais la console peut être configurée de manière à inclure directement ces rails et il est possible d'utiliser un rail ou plus pour guider la console.

L'invention n'est pas limitée à l'exemple du moyen de coulissement décrit, en particulier, le nombre, la forme et la disposition des appuis fixes par rapport aux appuis mobiles peuvent être différents.

Les moyens de coulissement qui sont définis ici comme comprenant des patins peuvent être différents, par exemple ils peuvent comprendre des galets.

Les appuis fixes sont ici au nombre de quatre, mais selon la géométrie de l'ensemble il est possible de placer uniquement deux appuis fixes 304a, 304b d'un des côtés du moyen de coulissement 308 et de part et d'autre du rail 202. Il est aussi possible de placer deux appuis fixes 304a ou 304b sur l'un des côtés du rail 202 au dessus ou au dessous respectivement, et de part et d'autre du moyen de coulissement 308.

Le nombre d'appuis fixes peut être réduit à 'un' lorsque l'arc-boutement de la console 102 ne peut arriver que dans une seule direction de déplacement, par exemple du fait de l'encombrement autour de la console 102 et des limites de coulissement de la console 102.

## Revendications

1. Dispositif de guidage pour un ensemble mobile (102) pour habitacle de véhicule, ledit ensemble mobile (102) étant coulissant et muni d'au moins un rail (202) définissant un plan (P1, P2), et
ledit dispositif de guidage (106) étant fixé sur ledit habitacle et comprenant au moins un moyen de coulissement (308) du ou des rails (202) par rapport au dispositif de guidage (106), ledit moyen de coulissement (308) définissant un intervalle intérieur de stabilité de l'ensemble mobile (102) dans la direction de coulissement (108), dans lequel si le centre de gravité de l'ensemble mobile (102) se projette verticalement à l'intérieur de cet intervalle intérieur de stabilité, l'ensemble mobile (102) n'est pas en porte-à-faux, mais si le centre de gravité de l'ensemble mobile (102) se projette verticalement à l'extérieur de cet intervalle, l'ensemble mobile (102) est en porte-à-faux,
le dispositif de guidage (106) étant **caractérisé en ce que** la longueur dudit moyen de coulissement (308) est inférieure à la longueur du ou des rails (202), **en ce que** chaque moyen de coulissement (308) est constitué d'un châssis (312) sur lequel sont agencés au moins un appui fixe (302b) qui coopère avec l'une des faces du ou des rails (202) et au moins un appui mobile (302a) qui est contraint contre l'autre face du ou des rails (202) et **en ce qu'**il comprend, en vis-à-vis d'au moins un des rails (202), au moins un autre appui fixe (304a, 304b) qui exerce sur le ou les rails (202) en vis-à-vis au moins une force de butée (Fa, Fb) sensiblement orthogonale au plan (P1, P2) lorsque le centre de gravité de l'ensemble mobile (102) se projette verticalement en dehors de l'intervalle intérieur de stabilité.

2. Dispositif de guidage (106) selon la revendication 1, **caractérisé en ce qu'**il comprend deux appuis fixes (304a) disposés à chaque extrémité du ou des moyens de coulissement (308) et au-dessus du ou des rails (202) et deux appuis fixes (304b) disposés à chaque extrémité du ou des moyens de coulissement (308) et au-dessous du ou des rails (202).

3. Dispositif de guidage (106) selon la revendication 2, **caractérisé en ce que** chaque appui fixe (304a, 304b) placé d'un côté du ou des rails (202) est disposé en vis-à-vis d'un appui fixe (304b, 304a) placé de l'autre côté du ou des rails (202).

4. Dispositif de guidage (106) selon la revendication 3, **caractérisé en ce que** la distance entre chaque appui fixe (304a, 304b) et le ou les rails (202) est strictement positive lorsque le centre de gravité de l'ensemble mobile (102) se projette verticalement dans l'intervalle intérieur de stabilité.

5. Dispositif de guidage (106) selon l'une des revendications 2 à 4, **caractérisé en ce que** les appuis fixes (304a, 304b) se prolongent par des rampes (306a, 306b) qui s'évasent dans des directions opposées aux moyens de coulissement (308).

6. Dispositif de guidage (106) selon la revendication 5, **caractérisé en ce que** les rampes (306a) en vis-à-vis de l'ensemble mobile (102) viennent en contact avec l'ensemble mobile (102) lorsque le centre de gravité de l'ensemble mobile (102) se projette verticalement en dehors de l'intervalle intérieur de stabilité.

7. Dispositif de guidage (106) selon l'une des revendications 1 à 6, **caractérisé en ce que** chaque appui fixe (302b) est disposé en vis-à-vis d'un appui mobile (302a).

8. Dispositif de guidage (106) selon l'une des revendications 1 à 7, **caractérisé en ce que** les appuis fixes (302b) et les appuis mobiles (302a) sont réalisés en un matériaux à faible coefficient de frottement sur le matériaux constituant le ou les rails (202), du type polyacétal (POM).

9. Dispositif de guidage (106) selon l'une des revendications 1 à 8, **caractérisé en ce que** le ou les appuis mobiles (302a) sont contraints par des ressorts (310).

10. Dispositif de guidage (106) selon l'une des revendications 1 à 9, **caractérisé en ce que** les contacts entre les appuis (302a, 302b) et le ou les rails (202) sont des contacts cylindres-plans.

11. Dispositif de guidage (106) selon l'une des revendications 1 à 10, **caractérisé en ce que** les appuis fixes (304a, 304b) forment des extensions de chaque châssis (312).

12. Ensemble (100) pour habitacle de véhicule **caractérisé en ce qu**'il comprend un ensemble mobile (102) et un dispositif de guidage (106) selon l'une des revendications précédentes.

13. Ensemble (100) selon la revendication 12, **caractérisé en ce que** l'ensemble mobile (102) est une console centrale de véhicule.

14. Véhicule **caractérisé en ce qu**'il comprend un ensemble selon l'une des revendications 12 ou 13.

## Claims

1. Guiding device for a mobile assembly (102) for a vehicle interior, said mobile assembly (102) being sliding and provided with at least one rail (202) defining a plane (P1, P2), and
said guiding device (106) being fixed to said interior and comprising at least one sliding means (308) for the rail or rails (202) in relation to the guiding device (106), said sliding means (308) defining an internal stability gap for the mobile assembly (102) in the sliding direction (108), in which if the centre of gravity of the mobile assembly (102) is projected vertically inside this internal stability gap, the mobile assembly (102) is not in an overhanging position, but if the centre of gravity of the mobile assembly (102) is projected vertically outside this gap, the mobile assembly (102) is in an overhanging position,
the guiding device (106) being **characterised in that** the length of said sliding means (308) is less than the length of the rail or rails (202), **in that** each sliding means (308) is constituted by a frame (312) on which are arranged at least one fixed support (302b) which co-operates with one of the faces of the rail or rails (202) and at least one mobile support (302a) which is held against the other face of the rail or rails (202) and **in that** it comprises, facing at least one of the rails (202), at least one other fixed support (304a, 304b) which exerts on the facing rail or rails (202) at least one stop force (Fa, Fb) which is substantially at right angles to the plane (P1, P2) when the centre of gravity of the mobile assembly (102) is projected vertically outside the internal stability gap.

2. Guiding device (106) according to claim 1, **characterised in that** it comprises two fixed supports (304a) disposed at each end of the sliding means (308) and above the rail or rails (202) and two fixed supports (304b) disposed at each end of the sliding means (308) and below the rail or rails (202).

3. Guiding device (106) according to claim 2, **characterised in that** each fixed support (304a, 304b) placed on one side of the rail or rails (202) is disposed facing a fixed support (304b, 304a) placed on the other side of the rail or rails (202).

4. Guiding device (106) according to claim 3, **characterised in that** the distance between each fixed support (304a, 304b) and the rail or rails (202) is strictly positive when the centre of gravity of the mobile assembly (102) is projected vertically in the internal stability gap.

5. Guiding device (106) according to one of claims 2 to 4, **characterised in that** the fixed supports (304a, 304b) are extended by ramps (306a, 306b) which flare out in opposite directions to the sliding means (308).

6. Guiding device (106) according to claim 5, **characterised in that** the ramps (306a) facing the mobile assembly (102) come into contact with the mobile assembly (102) when the centre of gravity of the mobile assembly (102) is projected vertically outside the internal stability gap.

7. Guiding device (106) according to one of claims 1 to 6, **characterised in that** each fixed support (302b) is disposed facing a mobile support (302a).

8. Guiding device (106) according to one of claims 1 to 7, **characterised in that** the fixed supports (302b) and the mobile supports (302a) are made of a material which has a low coefficient of friction on the materials constituting the rail or rails (202), of the polyacetal type (POM).

9. Guiding device (106) according to one of claims 1 to 8, **characterised in that** the mobile support or supports (302a) are held by springs (310).

10. Guiding device (106) according to one of claims 1 to 9, **characterised in that** the contacts between the supports (302a, 302b) and the rail or rails (202) are plane cylinder contacts.

11. Guiding device (106) according to one of claims 1 to 10, **characterised in that** the fixed supports (304a, 304b) form extensions of each frame (312).

12. Assembly (100) for a vehicle interior, **characterised in that** it comprises a mobile assembly (102) and a guiding device (106) according to one of the preceding claims.

13. Assembly (100) according to claim 12, **characterised in that** the mobile assembly (102) is a vehicle central console.

14. Vehicle, **characterised in that** it comprises an assembly according to one of claims 12 or 13.

## Patentansprüche

1. Führungsvorrichtung für eine bewegliche Einheit (102) für eine
Fahrzeugkabine, wobei die bewegliche Einheit (102) gleitet und mit wenigstens einer Schiene (202) ausgestattet ist, die eine Ebene (P1, P2) definiert, und
wobei die Führungsvorrichtung (106) an der Fahrzeugkabine befestigt ist und wenigstens ein Gleitelement (308) der Schiene oder der Schienen (202) in Bezug auf die Führungsvorrichtung (106) umfasst, wobei das Gleitelement (308) einen inneren Stabilitäts-Intervall der beweglichen Einheit (102) in Gleitrichtung (108) definiert, bei dem die bewegliche Einheit (102) nicht freitragend ist, wenn sich der Schwerpunkt der beweglichen Einheit (102) vertikal innerhalb dieses inneren Stabilitäts-Intervalls erstreckt, aber wenn sich der Schwerpunkt der beweglichen Einheit (102) vertikal außerhalb dieses Intervalls erstreckt, befindet sich die bewegliche Einheit (102) im freitragenden Zustand,
wobei die Führungsvorrichtung (106) **dadurch gekennzeichnet ist, dass** die Länge des Gleitelements (308) geringer ist als die Länge der Schiene oder der Schienen (202), dass jedes Gleitelement (308) aus einem Chassis (312) besteht, auf dem wenigstens ein festes Sockellager (302b) angeordnet ist, welches mit einer der Flächen der Schiene oder der Schienen (202) kooperiert und wenigstens ein bewegliches Sockellager (302a) angeordnet ist, welches fest gegen die andere Fläche der Schiene oder der Schienen (202) angepresst wird, und dass sie auf der gegenüberliegenden Seite wenigstens einer der Schienen (202) wenigstens ein weiteres festes Sockellager (304a, 304b) umfasst, welches auf die gegenüberliegende Schiene oder die Schienen (202) wenigstens eine Gegendruckkraft (Fa, Fb) genau orthogonal zur Ebene (P1, P2) ausübt, wenn sich der Schwerpunkt der beweglichen Einheit (102) vertikal außerhalb des inneren Stabilitäts-Intervalls erstreckt.

2. Führungsvorrichtung (106) nach Anspruch 1, **dadurch gekennzeichnet, dass** sie zwei feste Sockellager (304a) umfasst, welche an jedem Ende des oder der Gleitelemente (308) und über der oder den Schienen (202) angeordnet sind, und zwei feste Sockellager (304b), welche an jedem Ende des oder der Gleitelemente (308) und unter der oder den Schienen (202) angeordnet sind.

3. Führungsvorrichtung (106) nach Anspruch 2, **dadurch gekennzeichnet, dass** jedes feste Sockellager (304a, 304b), welches auf einer Seite der Schiene oder der Schienen (202) platziert ist, auf der gegenüberliegenden Seite mit einem festen Sockellager (304b, 304a) versehen ist, welches auf der anderen Seite der Schiene oder der Schienen (202) platziert ist.

4. Führungsvorrichtung (106) nach Anspruch 3, **dadurch gekennzeichnet, dass** der Abstand zwischen jedem festen Sockellager (304a, 304b) und der oder den Schienen (202) genau positiv ist, wenn sich der Schwerpunkt der beweglichen Einheit (102) vertikal im inneren Stabilitäts-Intervall erstreckt.

5. Führungsvorrichtung (106) nach einem der Ansprüche 2 bis 4, **dadurch gekennzeichnet, dass** sich die festen Sockellager (304a, 304b) über schräge Flächen (306a, 306b) hinaus verlängern, die sich in entgegengesetzten Richtungen zu den Gleitelementen (308) erweitern.

6. Führungsvorrichtung (106) nach Anspruch 5, **dadurch gekennzeichnet, dass** die der beweglichen Einheit (102) gegenüber liegenden schrägen Flächen (306a) mit der beweglichen Einheit (102) in Kontakt treten, wenn sich der Schwerpunkt der beweglichen Einheit (102) vertikal außerhalb des inneren Stabilitäts-Intervalls erstreckt.

7. Führungsvorrichtung (106) nach einem der Ansprüche 1 bis 6, **dadurch gekennzeichnet, dass** jedes feste Sockellager (302b) entgegengesetzt zu einem beweglichen Sockellager (302a) angeordnet ist.

8. Führungsvorrichtung (106) nach einem der Ansprüche 1 bis 7, **dadurch gekennzeichnet, dass** die festen Sockellager (302b) und die beweglichen Sockellager (302a) aus einem Material des Typs Polyacetal (POM) mit geringem Reibungskoeffizienten mit dem die Schiene oder die Schienen (202) bildenden Materialien bestehen.

9. Führungsvorrichtung (106) nach einem der Ansprüche 1 bis 8, **dadurch gekennzeichnet, dass** das oder die beweglichen Sockellager (302a) durch Federn (310) vorgespannt sind.

10. Führungsvorrichtung (106) nach einem der Ansprüche 1 bis 9, **dadurch gekennzeichnet, dass** die Kontaktstellen zwischen den Sockellagern (302a, 302b) und der oder den Schienen (202) planzylindrische Kontaktstellen sind.

11. Führungsvorrichtung (106) nach einem der Ansprüche 1 bis 10, **dadurch gekennzeichnet dass** die festen Sockellager (304a, 304b) an jedem Chassis (312) Fortsätze bilden.

12. Einheit (100) für eine Fahrzeugkabine, **dadurch gekennzeichnet dass** sie eine bewegliche Einheit (102) und eine Führungsvorrichtung (106) gemäß einem der vorangehenden Ansprüche umfasst.

13. Einheit (100) nach Anspruch 12, **dadurch gekennzeichnet, dass** die bewegliche Einheit (102) eine zentrale Fahrzeugkonsole ist.

14. Fahrzeug, **dadurch gekennzeichnet, dass** es eine Einheit gemäß einem der Ansprüche 12 oder 13 umfasst.
